# EUROPEAN PATENT SPECIFICATION

(11) **EP 2 172 588 B1**
(45) Date of publication and mention of the grant of the patent: **30.03.2016**
(21) Application number: 09172103.5
(22) Date of filing: 02.10.2009
(51) Int. Cl.: D06F 37/00, D06F 37/20, F16J 15/32

(54) **Seal assembly for a rotating drum of a washing machine, and washing machine provided with said seal assembly**
Dichtungsanordnung für eine Drehtrommel einer Waschmaschine und Waschmaschine mit der Dichtungsanordnung
Ensemble de joints pour le tambour rotatif d'une machine à laver, et machine à laver fournie avec cet ensemble de joints

(30) Priority: 03.10.2008 IT MI20080319 U
(43) Date of publication of application: 07.04.2010
(73) Proprietor: Rolf S.p.A., 20093 Cologno Monzese (IT)
(72) Inventor: Dossena, Luigi, 20125 Milano (IT)
(74) Representative: Bergadano, Mirko

(56) References cited:
- EP-A1- 1 514 966
- EP-A1- 1 972 713
- EP-A2- 1 055 850
- EP-A2- 1 096 185
- US-A- 3 199 318

## Description

The present invention relates to a seal assembly for a rotating drum of a washing machine, and to a washing machine with a rotating drum provided with said seal assembly.

Washing machines (clothes washers) with a rotating drum generally comprise a washing chamber, a rotating drum housed in the washing chamber, and a motor that drives a shaft, via a specific transmission system, so as to cause a cross member integrally connected to the drum to rotate; the motor is housed in a compartment that is separated from the washing chamber by a wall and the shaft is arranged so as to pass through an aperture in said wall; a seal element must therefore be fitted to seal the aperture and separate the washing chamber from the compartment housing the motor in a fluid-tight manner.

According to a common solution, the seal element is provided with a pair of radial sealing lips, which cooperate slidingly with the side surface of the shaft (or of a bush inserted on the shaft). The seal elements come in a variety of forms and structures, but the seal is always provided by the radial sealing lips.

EP1096185-A2 discloses a cassette-type seal assembly, comprising an outer ring, connected to the washing chamber and provided with two radial seal lips and one axial seal lip; and an inner ring, attached to the shaft and formed by a raceway for the sealing lips and a support ring.

US3199318 discloses a seal assembly having two generally radially extending seal lips; one of the lips axially contacts an axial surface of a collar fitted onto the drum hub.

This types of solution are not entirely satisfactory, especially in terms of reliability and the service life of the seal element.

On the other hand, it is becoming increasingly difficult to access the components inside modern washing machines, making maintenance operations or the replacement of parts more complicated.

The purpose of the present invention is to overcome the drawbacks of the prior art, in particular by providing a seal assembly for a rotating drum of a washing machine that reduces the need for maintenance and/or replacement, and is at the same time entirely efficient and simple and relatively cheap to produce.

The present invention thus relates to a seal assembly for a rotating drum of a washing machine as defined in its essential terms in claim 1 and, in its secondary and preferred features, in the dependent claims.

Essentially, the invention is characterized by integrating the radial sealing lips, provided in conventional solutions, with at least one axial sealing lip.

This solution achieves two main advantages.

Firstly, it drastically reduces the formation of that solid calcareous layer mixed with fabric threads, universally considered to be the main cause of leaking through traditional seal elements with the radial seal only. In conventional solutions, the calcareous deposit forms over the first radial sealing lip causing a gradual loss of elasticity and eventually making it impossible for the sealing lip to create a seal, and also resulting in rapid wear of the corner of contact, which is pressed harder against the shaft as the thickness and density of the calcareous layer increase.

The axial sealing lip drastically reduces the formation of the calcareous layer and protects the radial sealing lips so that their sealing function is preserved.

Secondly, integrating the radial sealing function, traditionally performed by the sealing lips sliding on the rotating shaft, with the axial sealing function improves the technical characteristics and overall efficiency of the seal element, so that in addition to their known capability of creating a fluid-tight seal on rotating shafts they also guarantee a seal in the presence of axial movements of the rotating system, with increased efficiency of the seal elements even in the event of strong dynamic oscillations, defects in form and/or machining defects on the sliding surfaces.

Moreover, the axial sealing lip prolongs the life of the radial sealing lips and thus of the overall seal element, by compensating over time for play due to deterioration of the mechanical components and also preventing the radial sealing lips from becoming worn.

The longer life of the seal element results in the need for fewer interventions under guarantee to repair faults caused by inefficiency of the sealing rings; moreover, the assembly according to the invention requires fewer mechanical components, with a subsequent reduction in production costs.

Further characteristics and advantages of the present invention will become clear from the description of the following non-limiting embodiments thereof, with reference to the figures in the accompanying drawings, in which:
- figure 1 is a schematic cross-sectional view of a seal assembly for a rotating drum of a washing machine, according to a first embodiment of the invention;
- figure 2 is an alternative embodiment of the assembly shown in figure 1, in which some parts have been removed for the sake of clarity;
- figure 3 is a schematic view of a further embodiment of the assembly according to the invention, in which some parts have been removed for the sake of clarity;
- figure 4 is a schematic view of a further embodiment of an assembly in which some parts have been removed for the sake of clarity.

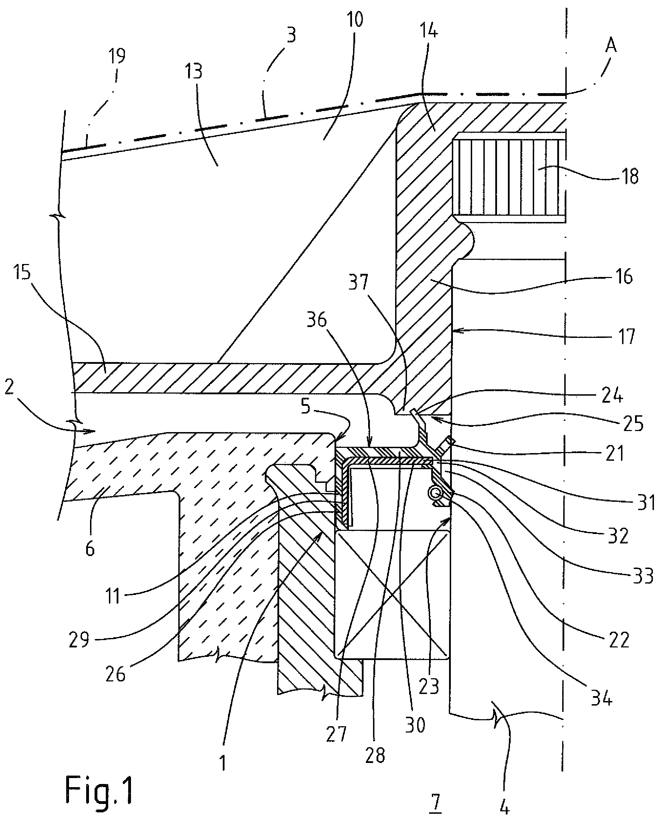

In figure 1 designated as a whole by number 1 is a seal assembly for a rotating drum of a washing machine (clothes washer).

The washing machine is per se substantially known and is not therefore described or illustrated for the sake of simplicity.

In essential terms, the washing machine comprises a washing chamber 2, a rotating drum 3 (known and only schematically indicated in figure 1) housed in the washing chamber 2, and a motor (not illustrated) that drives, via a specific transmission system (not illustrated), a rotating drum shaft 4 integrally connected to the drum 3 so as to cause the drum 3 to rotate.

The shaft 4 extends along an axis A and is rotatable about the axis A (axis of rotation) and is arranged so as to pass through an aperture 5 in a wall 6 of the washing machine that separates the washing chamber 2 from a service compartment 7 in which the motor is housed.

The seal assembly 1 separates the washing chamber 2 from the compartment 7 that houses the motor in a fluid-tight manner.

The seal assembly 1 comprises, in addition to the shaft 4, a support member 10 for supporting the drum 3 and a seal element 11 to seal the aperture 5 in a fluid-tight manner.

The member 10 is fixed to the drum 3 and is integrally connected to the shaft 4 so as to cause the drum 3 to rotate; in particular, the member 10 comprises a cross body 13, preferably an aluminium monolithic component, comprising a central portion 14 and a plurality of arms 15 arranged in a radial pattern that extend radially from the central portion 14; the central portion 14 constitutes a hub 16 of the drum 3 and has a hollow internal seat 17 in which a head 18 of the end of the shaft 4 is inserted and locked; the arms 15 are attached to a rear wall 19 of the drum 3.

The seal element 11 is of a generally annular shape and is arranged round the shaft 4 in the aperture 5.

The seal element 11 comprises one or more radial sealing lips, in this case a pair of radial sealing lips 21, 22 (shown, as are all the sealing lips in the other figures as well, in the non-deformed condition), which cooperate slidingly with a cylindrical sealing surface 23 arranged round the shaft 4 and the axis A, and at least one axial sealing lip 24, which cooperates with a front sealing surface 25 carried by the support member 10 and specifically by the hub 16 and substantially orthogonal to the shaft 4 and to the axis A. The cylindrical sealing surface 23 and the front sealing surface 25 are substantially orthogonal to one another.

In the example in figure 1, the seal element 11 is of the single ring type, and comprises a single sealing ring 26 comprising a reinforcement 27, made of a substantially rigid material, and a flexible covering 28, made of an elastomeric material and shaped so as to define the lips 21, 22, 24.

The reinforcement 27 has an L-shaped cross-section and comprises a cylindrical portion 29 about the axis A and a radially internal flange 30 orthogonal to the cylindrical portion, in the shape of a flat annular disk without curvatures.

The flange 30 has a radially internal free end portion 31, which terminates in a circular radially internal perimeter edge 32 from which the lips 21, 24 extend and optionally also the lip 22; the portion 31 from which the lips 21, 24 extend is flat (straight, viewed as a cross-section) and without curvatures.

The two radial sealing lips 21, 22 are arranged side by side along the axis A and extend obliquely from the edge 32 towards the shaft 4 and diverge from one another to define an annular chamber 33 optionally filled, in use, with grease or other lubricating fluid.

The axial sealing lip 24 and the nearest radial sealing lip 21 thereto extend axially towards the member 10 (i.e. towards the drum 3), while the other radial sealing lip 22 extends in the opposite direction, towards the compartment 7. According to a known solution, the lip 22 is loaded by a spring 34.

The seal element 11 has an annular front surface 36, facing towards the member 10, and the axial sealing lip 24 and the first radial sealing lip 21 both protrude axially beyond the front surface 36.

The front sealing surface 25 cooperating with the axial sealing lip 24 is a flat surface orthogonal to the axis A and is arranged on an annular projection 37 that extends rearwards from the member 10 and precisely from the hub 16.

In the example in figure 1, the projection 37 is a portion of the cross body 13 that constitutes the member 10, so that the front sealing surface 25 is an aluminium surface of the cross body 13.

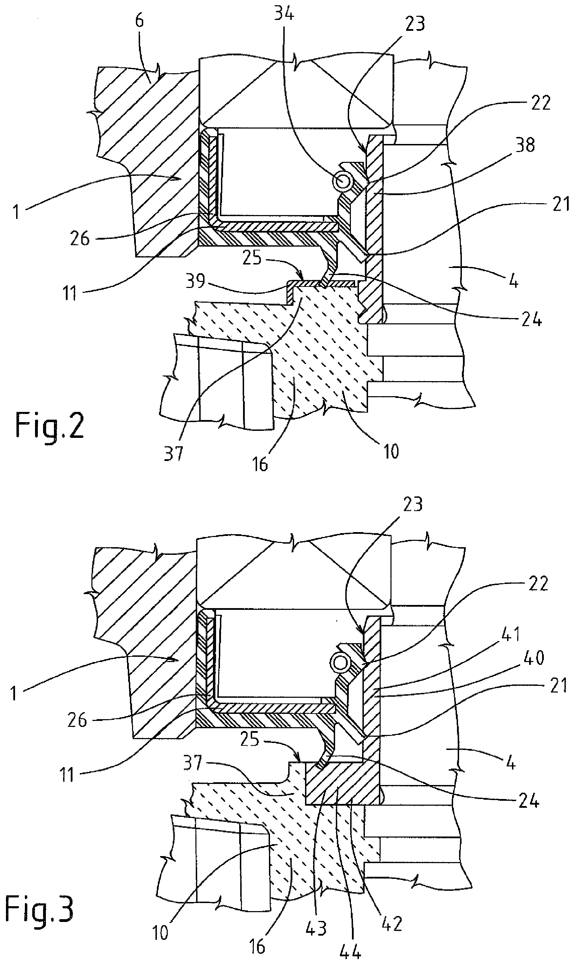

The cylindrical sealing surface 23 which cooperates with the radial sealing lips 21, 22 can consist, as illustrated in figure 1, of a portion of the side surface of the shaft 4, or, as shown in the alternative embodiment of figure 2 (in which, as in the following figures, the same reference numbers are used to indicate details that are similar or identical to those described previously), of a radially external side surface of a bush 38, for example made of metal and specifically brass, arranged coaxially around the shaft 4 and interposed between the shaft 4 and the seal element 11 (which is identical to that described previously with reference to figure 1).

In the alternative embodiment illustrated in figure 2, the projection 37 of the hub 16 is provided with an annular covering insert 39, coupled to the projection 37 and axially interposed between the hub 16 and the axial sealing lip 24; the front sealing surface 25 that cooperates with the lip 24 is in this case a front surface of the insert 39, made for example of metal and specifically of stainless steel.

According to the alternative embodiment shown in figure 3, both the cylindrical sealing surface 23 and the front sealing surface 25 are carried by a bush 40, for example made of metal and specifically of brass, arranged around the shaft 4 and having a sleeve portion 41 interposed between the shaft 4 and the radial sealing lips 21, 22 and a radially external flange portion 42, defining an insert 44 axially interposed between the hub 16 (i.e. the member 10) and the axial sealing lip 24. In the example shown in figure 3 the flange portion 42 is inserted in a seat 43 formed in the projection 37, but could also protrude axially from the member 10 so that the insert 44 constitutes the projection 37 (or part thereof).

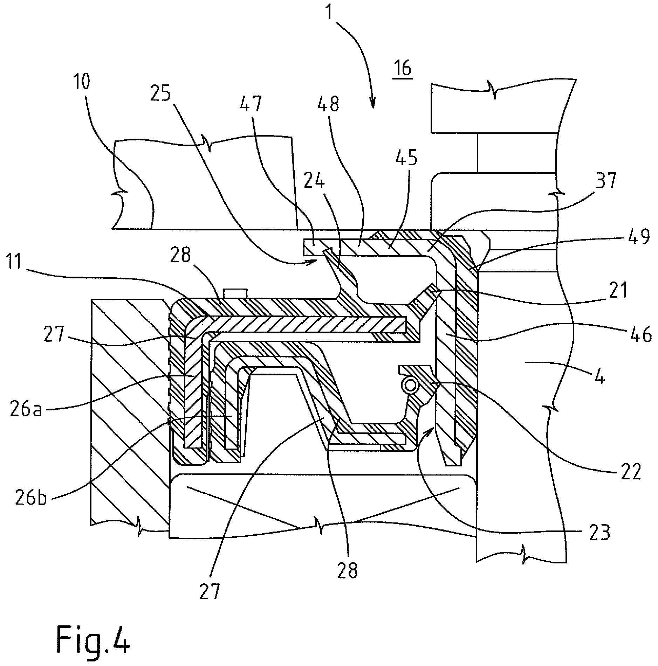

Figure 4 shows a further alternative which does not form part of the claimed invention and in which the seal element 11 is of the double ring type and comprises two coaxial sealing rings 26a, 26b radially inserted one inside the other and integrally joined to one another. Each of the sealing rings 26a, 26b comprises a reinforcement 27, made of a substantially rigid material, and a flexible covering 28, made of an elastomeric material.

The sealing ring 26a bears the axial sealing lip 24 and the first radial sealing lip 21 (nearest to the lip 24), while the sealing ring 26b bears the other radial sealing lip 22.

In this alternative embodiment, the cylindrical sealing surface 23 and the front sealing surface 25 are carried by a shield member 45, having an L-shaped cross-section and in particular comprising a sleeve portion 46, radially interposed between the shaft 4 and the radial sealing lips 21, 22, and a radially external flange portion 47 defining an insert 48 axially interposed between the member 10 (and specifically the hub 16) and the axial sealing lip 24 and protruding to the rear from the member 10 to define the projection 37.

The shield member 45 is made for example of metal and specifically of stainless steel and is provided with a flexible polymeric layer 49 facing towards the shaft 4 and the member 10.

It is understood that further modifications and variations can be implemented to the embodiments described and illustrated herein purely by way of example without departing from the scope of the invention as set forth in the claims.

## Claims

1. Seal assembly (1) for a rotating drum (3) of a washing machine, comprising a rotating drum shaft (4), extending along an axis (A) and rotatable about the axis and arranged so as to pass through an aperture (5) in a wall (6) of the washing machine; a support member (10) supporting the drum, fixed in use to the drum and integrally connected to the shaft so as to rotate the drum; and a seal element (11) for sealing the aperture (5) in a fluid-tight manner; the seal element (11) comprising a pair of radial sealing lips (21, 22), arranged side by side along the axis (A) and both of which cooperates slidingly with a cylindrical sealing surface (23) arranged around the shaft (4), and at least an axial sealing lip (24), which cooperates with a front sealing surface (25) carried by the support member (10) and substantially orthogonal to the axis (A); the seal element (11) comprising a reinforcement (27) that is substantially L-shaped and a flexible covering (28) configured so as to define the axial sealing lip (24) and the radial sealing lips (21); the seal element (11) having an annular front surface (36), facing towards the support member (10), and the axial sealing lip (24) and a first radial sealing lip (21) both protruding axially beyond said front surface (36); the assembly being **characterized in that** the front sealing surface (25) that cooperates with the axial sealing lip (24) is located on an annular projection (37), that projects rearwards from the support member (10) towards the axial sealing lip (24) and is a portion of a body (13) that constitutes the support member (10); and **in that** the reinforcement (27) comprises a cylindrical portion (29) about the axis (A) and a radially internal flange (30), having a free end portion (31) flat and without curvatures from which the axial sealing lip (24) and the radial sealing lips (21) extend.

2. Assembly according to claim 1, wherein the cylindrical sealing surface (23) consists of a portion of the side surface of the shaft (4).

3. Assembly according to one of the previous claims, wherein the support member (10) consists of a cross body (13) comprising a central portion (14) integrally connected to the shaft (4) and a plurality of arms (15) arranged in a radial pattern which extend radially from the central portion (14) and are fixed to a rear wall (19) of the drum (3).

4. Washing machine with rotating drum, comprising: a washing chamber (2); a rotating drum (3) housed in the washing chamber; a motor housed in a compartment (7) separated from the washing chamber by a wall (6); and a seal assembly (1) for the drum, for separating the washing chamber (2) from the compartment (7) that houses the motor in a fluid-tight manner; wherein the seal assembly for the drum is a seal assembly according to any one of the previous claims.

## Patentansprüche

1. Dichtungsanordnung (1) für eine Drehtrommel (3) einer Waschmaschine, die aufweist: eine Drehtrommelwelle (4), die sich entlang einer Achse (A) erstreckt und um die Achse drehbar ist und derart angeordnet ist, dass sie durch eine Öffnung (5) in einer Wand (6) der Waschmaschine geht; ein Halteelement (10), das die Trommel hält, das in der Verwendung an der Trommel befestigt ist und integral mit der Welle verbunden ist, um die Trommel zu drehen; und ein Dichtungselement (11) zum Abdichten der Öffnung (5) in einer fluiddichten Weise; wobei das Dichtungselement (11) ein Paar radialer Dichtungslippen (21, 22), die entlang der Achse (A) nebeneinander angeordnet sind und von denen beide gleitend mit einer zylindrischen Dichtungsoberfläche (23) zusammenwirken, die um die Welle (4) herum angeordnet ist, und wenigstens eine axiale Dichtungslippe (24) aufweist, die mit einer vorderen Dichtungsoberfläche (25) zusammenwirkt, die von dem Halteelement (10) getragen wird und im Wesentlichen orthogonal zu der Achse (A) ist; wobei das Dichtungselement (11) eine Verstärkung (27), die im Wesentlichen L-förmig ist, und eine flexible (28) Abdeckung aufweist, die derart aufgebaut ist, dass sie die axiale Dichtungslippe (24) und die radialen Dichtungslippen (21) definiert; wobei das Dichtungselement (11) eine ringförmige vordere Oberfläche (36) hat, die in Richtung des Halteelements (10) gewandt ist, und wobei die axiale Dichtungslippe (24) und eine erste radiale Dichtungslippe (21) beide axial über die vordere Oberfläche (36) hinaus vorstehen; wobei die Anordnung **dadurch gekennzeichnet ist, dass** die vordere Dichtungsoberfläche (25), die mit der axialen Dichtungslippe (24) zusammenwirkt, auf einem ringförmigen Vorsprung (37) angeordnet ist, der von dem Halteelement (10) nach hinten in Richtung der axialen Dichtungslippe (24) vorsteht und ein Abschnitt eines Körpers (13) ist, der das Halteelement (10) bildet; und dass die Verstärkung (27) einen zylindrischen Abschnitt (29) um die Achse (A) herum und einen radial inneren Flansch (30) aufweist, der einen freien Endabschnitt (31) hat, der flach und ohne Krümmungen ist, von dem sich die axiale Dichtungslippe (24) und die radialen Dichtungslippen (21) erstrecken.

2. Anordnung nach Anspruch 1, wobei die zylindrische Dichtungsoberfläche (23) aus einem Abschnitt der Seitenoberfläche der Welle (4) besteht.

3. Anordnung nach einem der vorhergehenden Ansprüche, wobei das Halteelement (10) zusammengesetzt ist aus: einem Querkörper (13), der einen integral mit der Welle (4) verbundenen zentralen Abschnitt (14) und mehrere Arme (15), die in einem radialen Muster angeordnet sind, die sich radial von dem zentralen Abschnitt (14) erstrecken und an einer Rückwand (19) der Trommel (3) befestigt sind, aufweist.

4. Waschmaschine mit einer Drehtrommel, die aufweist: eine Waschkammer (2); eine Drehtrommel (3), die in der Waschkammer aufgenommen ist; einen Motor, der in einem Abteil (7) aufgenommen ist, das von der Waschkammer durch eine Wand (6) getrennt ist; und eine Dichtungsanordnung (1) für die Trommel, um die Waschkammer (2) von dem Abteil (7), das den Motor in einer fluiddichten Weise aufnimmt, zu trennen; wobei die Dichtungsanordnung für die Trommel eine Dichtungsanordnung nach einem der vorhergehenden Ansprüche ist.

## Revendications

1. Ensemble d'étanchéité (1) pour un tambour rotatif (3)d'une machine à laver, comprenant :
- un arbre de tambour rotatif (4) s'étendant le long d'un axe (A) et pouvant tourner autour de l'axe et agencé pour passer à travers une ouverture (5) dans une paroi (6) de la machine à laver,
- un élément de support (10) supportant le tambour, fixé, à l'usage, au tambour et raccordé de manière solidaire à l'arbre afin de faire tourner le tambour, et
- un élément d'étanchéité (11) pour fermer hermétiquement l'ouverture (5) d'une manière étanche au fluide,
où l'élément d'étanchéité (11) comprend une paire de lèvres d'étanchéité radiales (21, 22) agencées côte à côte le long de l'axe (A) et dont les deux coopèrent de manière coulissante avec une surface d'étanchéité cylindrique (23) agencée autour de l'arbre (4), et au moins une lèvre d'étanchéité axiale (24) qui coopère avec une surface d'étanchéité avant (25) portée par l'élément de support (10) et sensiblement orthogonale à l'axe (A), où l'élément d'étanchéité (11) comprend un renforcement (27) qui est sensiblement en forme de L et un revêtement flexible (28) configuré pour définir la lèvre d'étanchéité axiale (24) et les lèvres d'étanchéité radiales (21), et où l'élément d'étanchéité (11) a une surface avant annulaire (36) orientée vers l'élément de support (10), et la lèvre d'étanchéité axiale (24) et une première lèvre d'étanchéité radiale (21) font toutes deux saillie axialement au-delà de ladite surface avant (36), l'ensemble étant **caractérisé en ce que** la surface d'étanchéité avant (25) qui coopère avec la lèvre d'étanchéité axiale (24) est positionnée sur une saillie annulaire (37), qui fait saillie vers l'arrière à partir de l'élément de support (10) vers la lèvre d'étanchéité axiale (24) et fait partie d'un corps (13) qui constitue l'élément de support (10) et **en ce que** le renforcement (27) comprend une partie cylindrique (29) autour de l'axe (A) et une bride radialement interne (30), ayant une partie d'extrémité libre (31) plate et sans courbures à partir de laquelle la lèvre d'étanchéité axiale (24) et les lèvres d'étanchéité radiales (21) s'étendent.

2. Ensemble selon la revendication 1, **caractérisé en ce que** la surface d'étanchéité cylindrique (23) se compose d'une partie de la surface latérale de l'arbre (4).

3. Ensemble selon l'une des revendications précédentes, **caractérisé en ce que** l'élément de support (10) se compose d'un corps transversal (13) comprenant une partie centrale (14) raccordée de manière solidaire à l'arbre (4) et une pluralité de bras (15) agencés selon un modèle radial qui s'étendent radialement à partir de la partie centrale (14) et sont fixés à une paroi arrière (19) du tambour (3).

4. Machine à laver avec un tambour rotatif, comprenant :
- une chambre de lavage (2),
- un tambour rotatif (3) logé dans la chambre de lavage,
- un moteur logé dans un compartiment (7) séparé de la chambre de lavage par une paroi (6), et
- un ensemble d'étanchéité (1) pour le tambour, afin de séparer la chambre de lavage (2) du compartiment (7) qui loge le moteur d'une manière étanche au fluide,
**caractérisée en ce que** l'ensemble d'étanchéité pour le tambour est un ensemble d'étanchéité selon l'une quelconque des revendications précédentes.
